# EUROPEAN PATENT SPECIFICATION

(11) **EP 1 337 141 B1**
(45) Date of publication and mention of the grant of the patent: **15.07.2009**
(21) Application number: 01973840.0
(22) Date of filing: 03.10.2001
(51) Int. Cl.: A01K 23/00

(54) **ADJUSTABLE PERINEAL HARNESS AND URINE COLLECTION DEVICE**
VERSTELLBARER PERINEALGURT UND HARNSAMMLER
HARNAIS PERINEAL AJUSTABLE ET APPAREIL COLLECTEUR D'URINE

(30) Priority: 03.10.2000 AU PR051400; 04.12.2000 US 251177 P; 08.12.2000 AU PR201300
(43) Date of publication of application: 27.08.2003
(73) Proprietor: Bewer Pty Ltd, Kerrie, Victoria 3434 (AU)
(72) Inventor: VELLA, Daira Velda, Kerrie, VIC 3434 (AU)
(74) Representative: Ryan, Anne Mary
(86) International application number: PCT/AU2001/001243
(87) International publication number: WO 2002/028172

(56) References cited:
- WO-A-97/21343
- WO-A-99/57969
- WO-A1-01/33951
- FR-A- 925 362
- FR-A- 929 961
- US-A- 2 472 186
- US-A- 3 036 553
- US-A- 3 850 159
- US-A- 4 103 645
- US-A- 5 738 047

## Description

### Field of the invention

The present invention relates broadly to the collection of urine from animals, especially female animals such as mares, cows, camels and the like.

### Background

The urine of pregnant mares includes conjugated oestrogens, which can be recovered from the urine and used in various pharmaceutical preparations. In particular, conjugated oestrogens harvested from urine can be used in hormone replacement pharmaceutical preparations for humans, and as hormone growth stimulants for other animals.

Various devices and techniques exist for collecting urine from pregnant mares. Some of these existing arrangements are described directly below.

United States patent numbers 3,270,714 and 3,036,553 disclose urine collection systems involving a collection unit suspended from the rear of the mare, an opening in which is intended to encircle the vulva. The unit funnels urine away from the vulva for separate storage.

United States patent number 3,850,159 describes a related system, in which straps pass along either side of the mare's tail to suspend a barrier extension, the end of which is positioned between the anus and vulva of the mare. Faeces falling from the anus pass over the top of the barrier extension, so that the faeces do not contaminate the collected urine.

At present, one existing method of collection urine from pregnant mares involves the use of a catcher generally of the type described in international patent application PCT/AU94/00709 entitled "Equidae manure/urine catcher" (published as WO 95/13695). This type of device is commonly referred to as a horse nappy or diaper, as it collects urine and manure from the mare in a pouch that generally conforms to the underbelly of the mare.

These and other arrangements are not entirely satisfactory. There is a distinct possibility that faeces produced by the animal can contaminate the collected urine by not being satisfactorily deflected away from the mare. There is generally an increased risk of contamination when the faeces has a relatively high liquid content, as is often the case. This can cause the faeces to run down the buttocks, making it more difficult to deflect the faeces away from the mare.

Collection devices of this type suffer various disadvantages. In particular, as the diaper collects urine and faeces, the diaper can become quite heavy for the mare to carry. This can be relatively cumbersome for the mare, and can result in discomfort.

In view of the above observations, a need clearly exists for improved arrangements and techniques for harvesting urine from animals.

### Summary

Urine is advantageously collected from animals using a perineal harness able to be placed against the animals' buttocks. The perineal harness is placed in the perineum region of the animal, below the anus. A deflector plate that is profiled to match the buttocks of the animal is able to be snugly engaged against the buttocks to effectively deflect faeces away from the animal and urine collected from the animal.

A collection device is advantageously used in conjunction with the perineal harness described above. The collection device facilitates collection of the urine in a storage chamber supplied, via a tubular passage, with urine from the animal. Such a collection device desirably avoids wastage of collected urine, and allows the storage chamber to be readily replaced and cleansed. The storage chamber can be used for storing urine after collection. -

### Description of drawings

Fig. 1 is a perspective view of different components of a perineal harness suitable for fitting to an animal to assist in collecting urine for the animal.
Fig. 2 is a view from the underside of one component of the perineal harness of Fig. 1.
Fig. 3 is a side view corresponding with the underside view of Fig. 2.
Fig. 4 is a view illustrating the perineal harness of Fig. 1 when fitted to a mare.
Fig. 5 is a perspective view of part of a collection device suitable for collecting urine in conjunction with the perineal harness device of Fig. 1.
Fig. 6 is a cross-sectional view of the collection device illustrated in Fig. 5.
Fig. 7 is a perspective view of part of a collection device that can be used as an alternative to that illustrated in Fig. 5.
Fig. 8 is a perspective view illustrating how urine is presented to the collection device of Fig. 5.
Fig. 9 is a rear view that illustrates the perineal harness of Fig. 1 and the collection device of Fig. 5 when fitted to a mare.
Fig. 10 is a side view corresponding with the rear view of Fig. 9.
Fig. 11 is a view of a mare fitted with a strap assembly and part of the collection device of Fig. 5.
Fig. 12 is a drawing that illustrates a mare fitted with the perineal harness of Fig. 1 and the collection device of Fig. 5 using a strap assembly also illustrated in Fig. 11.
Fig. 13 is a rear view, similar to Fig. 9, that illustrates the perineal harness of Fig. 1 when fitted to a cow.
Fig. 14 is a drawing, similar to Fig. 12, that illustrates a cow fitted with the perineal harness of Fig. 1 and the collection device of Fig. 5.

### Detailed description

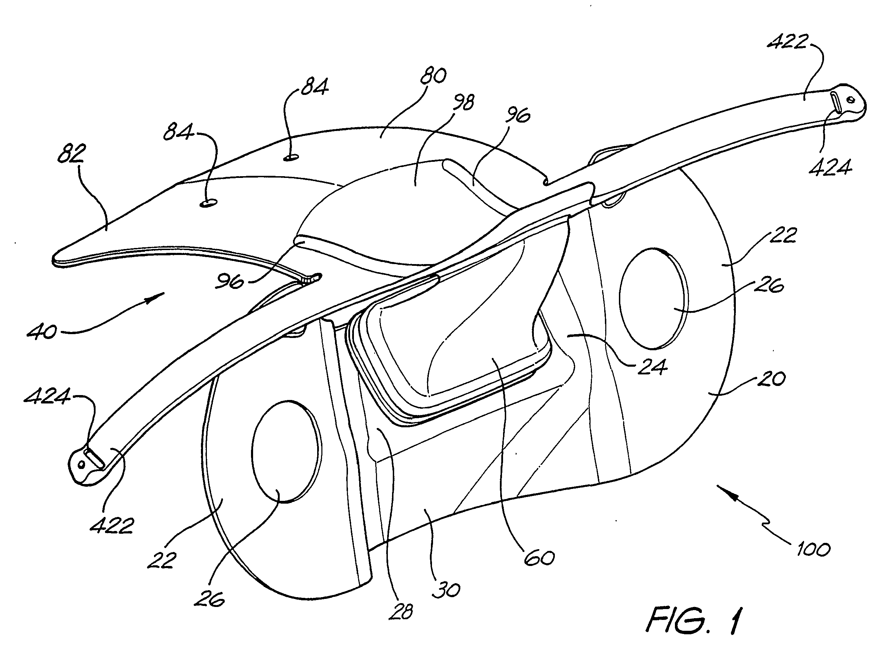

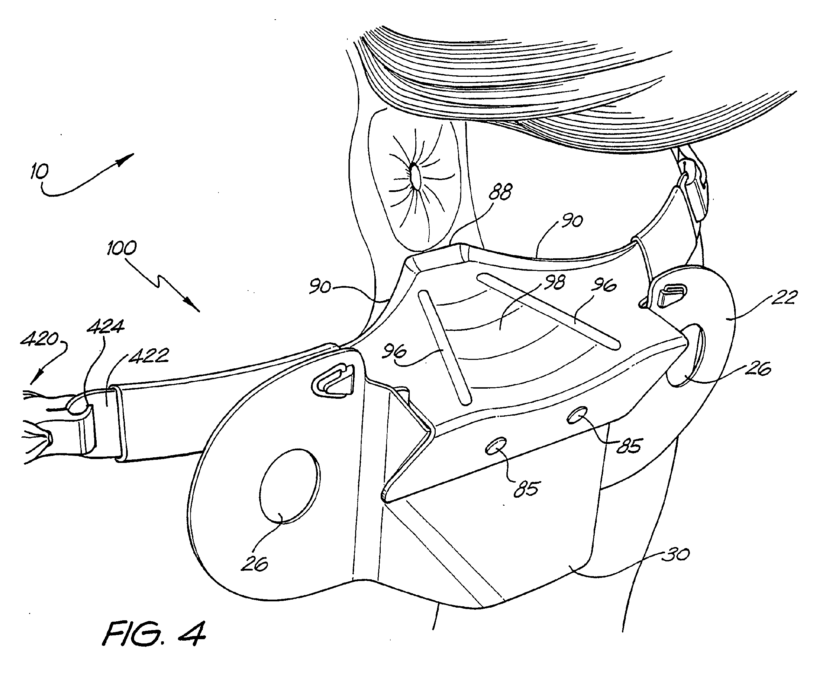

A perineal harness device 100, for facilitating the collection of urine, is illustrated in Fig. 1. The perineal harness 100 includes two primary integral components, a base plate 20 and a body 40. As illustrated in Fig. 1, the body 40 includes a support portion 60 and a deflector plate 80. The body 40 engages the base plate 20 to form a unit that can be clamped against the buttocks region of a mare 10, to assist in the collection of urine from the mare 10, as indicated in Fig. 4. The perineal harness 100 is fitted to the mare 10 with the assistance of an engaging means in the form of arms 422 and co-operating external straps 420 fitted to a strap assembly 400 as later described In the context of the drawings.

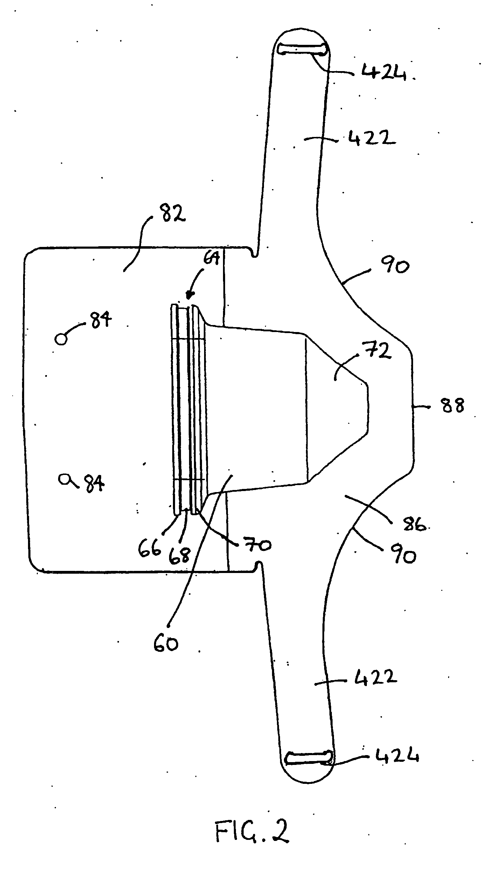

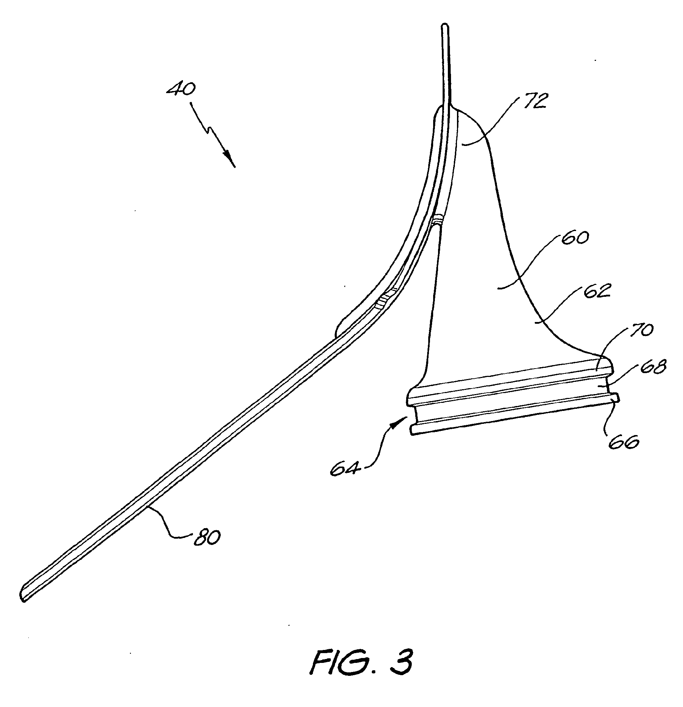

Figs. 2 and 3 are two views of the body 40 of the perineal harness 100. The support portion 60 and the deflector plate 80 are integral with each other. The support portion 60 ends in an engaging portion 64 that is of a generally rectangular shape. At the other end of the support portion 60 there is a tip 72 that attaches the support portion 60 to the deflector plate 80.

The engaging portion 64 involves a base 66 and a shoulder 70 that together define a channelled groove 68 extending around the periphery of the engaging portion 64. The engaging portion 64 of the support portion 60 is adapted to be engaged with the base plate 20. To enhance the fit with which the support portion 60 engages the base plate 20, a band member (not shown) can be securely tightened within the channelled groove 68. The band member can be a cable tie such as a conventional plastic ratchet-based fastener.

The deflector plate 80, illustrates most clearly in Figs. 1 and 2, has front contact edges 88, 90, namely a front edge 88 and side edges 90, as illustrated in Fig. 2.

The side edges 90 extend outwardly to arms or straps 422. Slots 424 are formed near the respective ends of the arms 422, as illustrated in Fig. 2. Behind the front contact edges 88, 90 is rear portion 82 of the deflector plate 80, in which are formed two holes 84.

As illustrated in Fig. 1, there are two angularly positioned baffles 96 located on one side of the deflector plate 80. The baffles 96 are generally semi-circular in profile and extend outwardly from the front contact edges 88, 90 of the deflector plate 80, from near where the front edge 88 joins respective side edges 90. The baffles 96 extend into the rear portion 82 of the deflector plate 80. Extending between the baffles 96 is a concave trough 98.

As described above, the body 40 of the device 10 is, in use, attached with the base plate 20. The base plate 20 has two ends 22 connected by a middle portion 24, which includes a platform 28 and a chute 30. The platform 28 and the chute 30 are angled with respect to each other, and with respect to the ends 22, to assist in directly uncontaminated urine away from the vulva for separate collection.

The ends 22 include holes 26 to assist in attaching the perineal harness 100 with external equipment, if and when required. The holes 26 are used to secure the deflector plate 80 securely to the body 40 of the perineal harness 100, with the use of suitable studs. The studs can be welded using PVC welding to achieve a secure and stable attachment to ensure that the deflector plate 80 and the base plate 20 do not move from the prescribed relative positions.

Fig. 4 shows the perineal harness 100 when fitted to the rear of a mare 10. The support portion 60 is positioned between the buttocks of the mare 10, directly below the anus of the mare 10. As illustrated, the arms 422 are attached using a harness assembly 400, via breeching straps 420. These breeching straps 420 engage the slots 424 in the arms 422.

As shown in Fig. 4, the base plate 20 Is positioned against the rear of the mare 100, and supports the body 40. The support portion 60 is attached with, and projects from, the platform 28 of the base plate 20. The support 29 is angled so that the support portion 60 and the contact edges 88, 90 of the deflector plate 80 are appropriately positioned with respect to the buttocks and perineum region of the mare 10. The chute 30 is angled downwardly and outwardly to assist in collecting urine from the mare 10.

The body 40 of the perineal harness 100 is held against the rear of the mare 10 with the assistance of the arms 422 and the breeching straps 420. The tension in the arms 422 maintains the front and side edges 88, 90 of the deflector plate in a snugly fitted engagement with the buttock profile of the mare 10.

The tension in the straps 420 and arms 422 can be adjusted by adjusting the length of the straps 420 on each side the mare 10, depending on the size of the mare 10 and the mane's anatomical shape in the buttocks region adjacent the anus, perineum and vulva. When the perineal harness is fitted to the mare 10, the tension in each of the breeching straps 420 can be adjusted so that a desirable fit is achieved. In use the edges 88, 90 of the deflector plate 80 extends upwardly against the rear of the mare 10.

This snug fitting arrangement can be readily achieved using the tension provided by the breeching straps 420, and as the deflector plate 80 extends over the support portion 60, as indicated In Fig. 2. As the edges 88, 90 of the deflector plate 80 are firmly engaged against the mare 10, faeces produced by the mare 10 is generally able to captured and deflected by the deflector plate 80. Faeces deflected away from the mare by the deflector plate 80 simply falls to the ground. Alternatively, the faeces can be collected separately from the urine in a pouch (not shown) located near the rear of the mare 10. Collection may be desirable to assist ih analysing the state of the mare's health, or to study the mare's nutritional requirements.

Faeces produced by the mare can have a high liquid content, such that the faeces runs down the buttocks of the mare 10. In this case, the snug fit of the front contact edges 88, 90 against the mare 10 generally ensures that the faeces do not run any further down the buttocks of the mare 10 so that the faeces does not contaminate urine collected from the mare 10. Further, this snug fit attempts to minimise the risk of rain or other possible contaminants. Possible contaminants can include dust, straw, stale bedding materials, wood shavings, flies and other insects from contaminating the collected urine. A snug fit ensures that contaminants such as these do not interfere with urine collection, particularly when the mare is permitted to roam freely outdoors.

The baffles 95 and trough 98 extending between the baffles assist in directing faeces from the mare 10 along the deflector plate 80 and to the ground. This arrangement attempts to effectively channel faeces along the deflector plate 80 and away from the buttocks of the mare 10.

The mare 10 can wear a tail guard (not shown) wrapped around the tail, to reduce the possibility of any damage to the mare's tail or tail dock caused by, for example, rubbing or chaffing against the perineal harness 100, when fitted. Any tail guard can be attached to the strap assembly 400 by any suitable means, in order to support the tail as required.

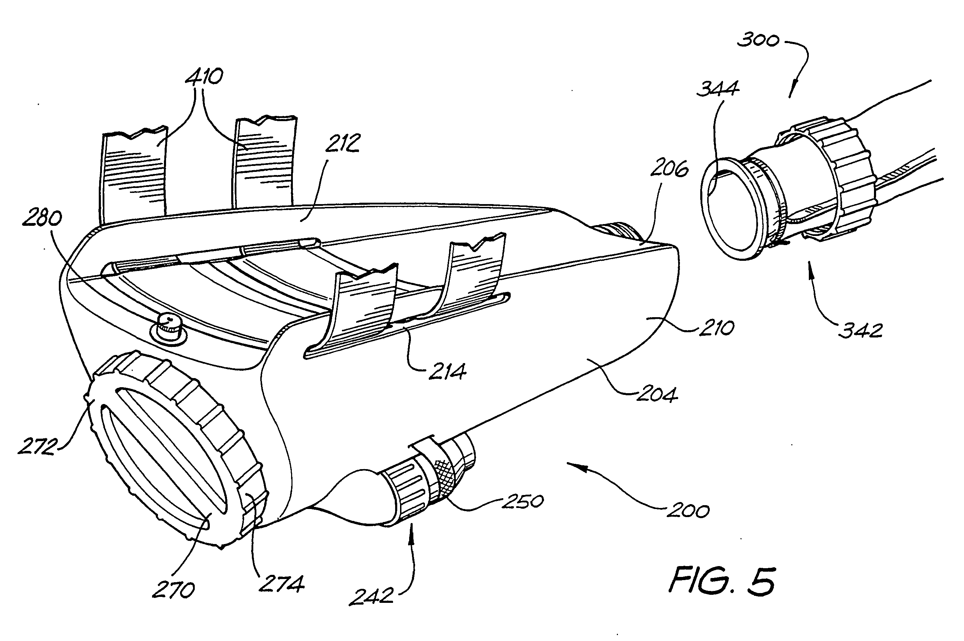

A collection device 100 for use in conjunction with the perineal harness 100 is now described with reference to Figs. 5, 6 and 8. These drawings illustrate a collection device 1000. In these drawings, the collection device 1000 is fitted to the mare 10 with the assistance of a harness or strap assembly 400, and a perineal harness 100 and are used for suitably locating an end of the collection device 1000 for the receipt of urine from the mare 10. The perineal harness 100 generally separates urine and faeces produced by the mare 10, and generally presents only urine to the collection device 1000. The use of the strap assembly 400 and perineal harness that are used in conjunction with the collection device 1000 for the harvesting of urine from the mare 10 are described in further detail below.

The perineal harness 100 is positioned against the rear of the mare 10 so that a buttocks portion of the perineal harness 100 rests against the vulva of the mare 10. The perineal harness 100 is able, with relative efficiency, to separate urine from faeces produced by the mare 10. Faeces is channelled over an upper portion of the perineal harness 100 and simply drops to the ground or into a manure collection bag fitted to the rear of the perineal harness 100. Urine is channelled to a collection aperture provided on one end of the collection device 1000.

The collection device 1000 includes a main chamber component 200 and a collection tube component 300. These two components are releasably engaged by an engagement means that comprises components respectively disposed on the chamber component 200 and the tube component 300, as later discussed in further detail.

The tube component 300 has two ends 320, 340 connected by tubing 310. The first end 320, from which urine is initially collected, has a collection aperture 322 through which urine initially passes from the mare 10. Covering the collection aperture 322 is a removable mesh filter 324 that filters material presented to the collection aperture 322. The mesh filter 324 can be provided to restrict the passage of any foreign matter (that is, anything other than urine) from entry into the collection tube component 300. In particular, despite the use of the perineal harness 100 as mentioned above, there is possibility that some faeces or other matter may unintentionally pass to the collection aperture 322 of the collection tube component 300.

Faeces is a contaminant of urine collected from pregnant mares, and any faeces presented to the collection aperture 322 is desirably screened by the mesh filter 324 so that is does not enter the tube component 300. The mesh filter 324 is removable, so that it can be readily removed or replaced, either with a new mesh filter 324 or the same mesh filter 324 after cleaning. During routine cleaning operations, any residual matter on the mesh filter 324 can be removed from the mesh filter 324.

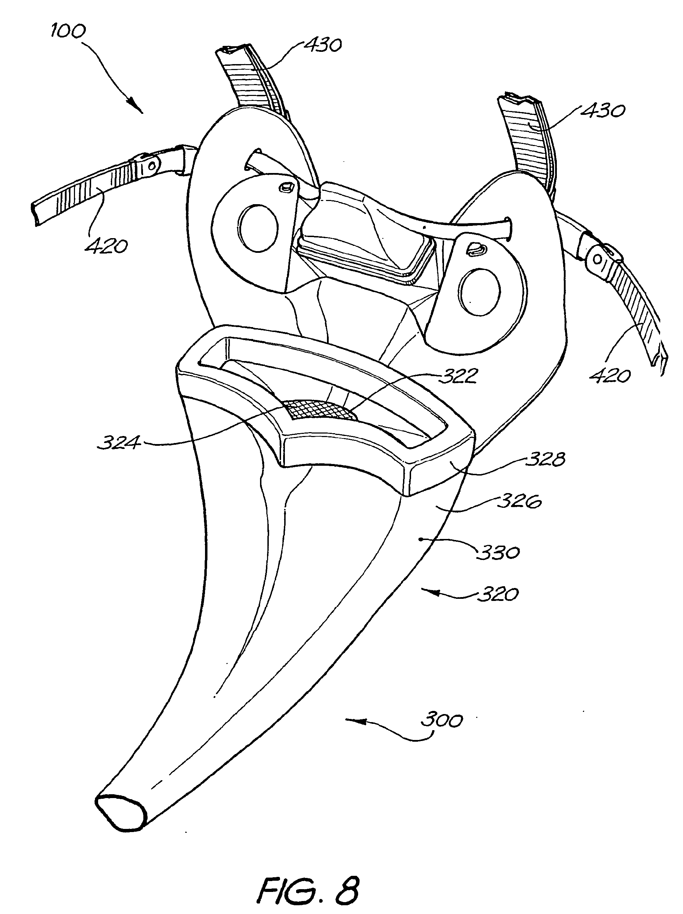

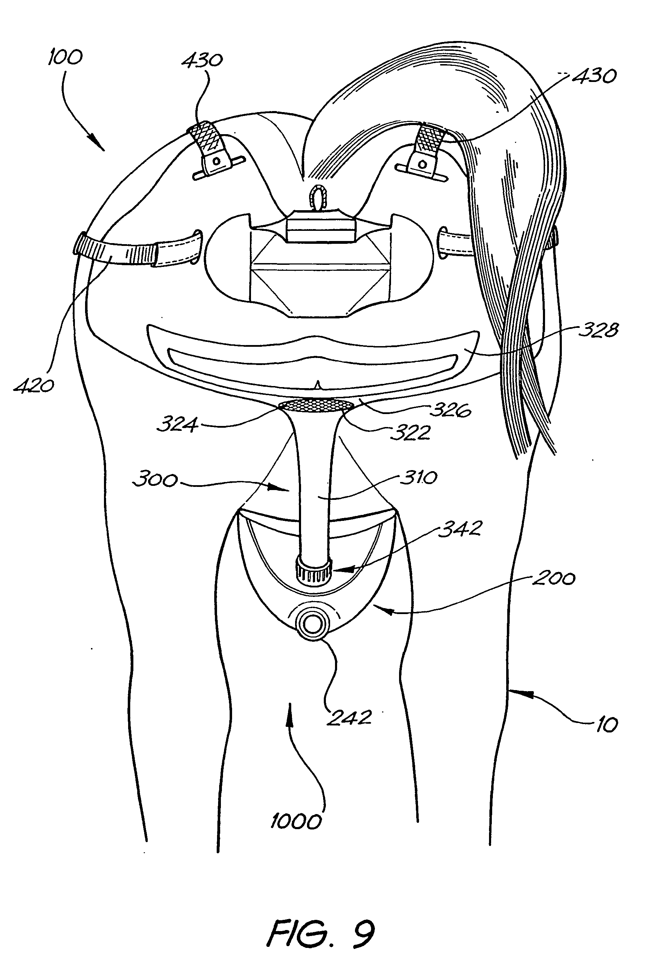

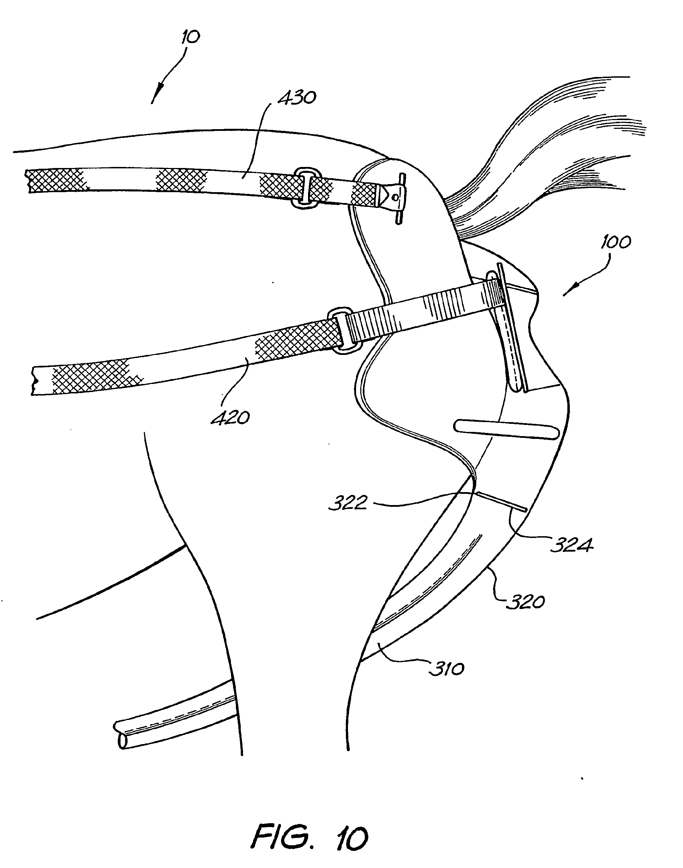

As indicated in Figs. 8 and 9, the tube portion 310 is outwardly tapered towards its first end 320 to form a funnel-like arrangement material 326 extending around the collection aperture 322. This arrangement 326 assists in appropriately positioning the collection aperture 322 of the collection device 1000 at the rear of the mare 10. Urine that falls within the mouth of the funnel arrangement 326 is able to pass through the collection aperture 322 via the mesh filter 324. Fig. 10, which is a side view corresponding with Fig. 9, illustrates how urine can pass through the collection aperture 322 via the mesh filter 324.

Around the periphery of the funnel arrangement 326 at the first end 320 of the tube component 300 is a resilient guard member 328 that assists in ensuring the effectiveness of the funnel arrangement 326. The tube portion 310 is sufficiently pliable to be occluded by the mare if, for example, she backs up against a fence to thereby block the passage for urine provided by the tube portion 310.

The tube portion 310 is constructed of a soft rubber material to minimise any potential discomfort to the mare during regular use, and to minimise discomfort to the mare 10 and for her foal, should the foal find itself caught by the tube portion 310, for example, during suckling. Any such occlusion involving the tube portion 310 is likely to be only temporary, as the rubber material from which the tube portion 310 is made is sufficiently resilient to return to its normal shape. However, any such occlusion of the passage near its first end 320 can prevent urine from being collected.

A guard member 328, as illustrated in Fig. 8, is provided around the periphery of the funnel arrangement 326 to reduce the likelihood of any such loss. The guard member 328 is also made of a flexible resilient rubber material, though as the guard member 328 is relatively thick and the guard member 328 deforms more gradually in response to external pressures. One side of the guard member 328 conforms to the rear of the mare 10, while the other side conforms to the perineal harness 100 as indicated. As a result, if the mare backs up to a fence, the action of the mare pressing against the apparatus, is less likely to cause the tube portion 310 to be occluded as the guard member 328 assists in resisting deformation of the funnel arrangement 326, to some extent.

A passage 330 is provided in the material of the funnel arrangement 326 to allow excess urine to be shed, if the mare produces too much urine to be stored in the chamber component 200. The passage 330 is located in the funnel arrangement 326 below the guard member 328 and below the mesh filter 324⁻and aperture 322. Some excess urine can be temporarily stored in the tube component 300, while the remainder drains off to the ground.

The first end 320 of the tube component 300 is attached with the perineal harness 100 and associated components, as shown, to appropriately position the first end 320 of the collection tube 300. The strap assembly 400 holds the perineal harness 100 in position. Upper straps 430 and side straps 420 of the strap assembly 400 hold the perineal harness 100 as illustrated. The positioning of the tube component 300 with respect to the mare 10 is shown, in cross-section, by Fig. 3. The orientation of the tube component 300 assists in efficiently collecting as much urine as possible from the mare 10.

The first end 320 of the collection tube component 300 is attached with the tube portion 310, which is desirably elliptical or circular in cross-sectional profile. The tube portion 310 is sufficiently pliable to permit the tube portion 310 to be bent to any suitable shape or orientation to accommodate the shape and movement of the mare. The tube portion 310 is desirably manufactured from a silicon-based or PVC welded material.

The second end 340 of the tube component 300 distal the first end 320 is depicted in Figs. 4 and 5. The tube component 300 includes an outlet aperture fitting 342 terminating with an outlet aperture 344. The outlet aperture fitting 342 is connected to the tube 310 by a stem portion 346 that contacts an inner surface of the tube 310. An outer portion 348 of the fitting 342 is integral with the stem portion 346 and includes a screw-threaded portion on the main chamber component 200. Alternatively, a self-locking portion can be used.

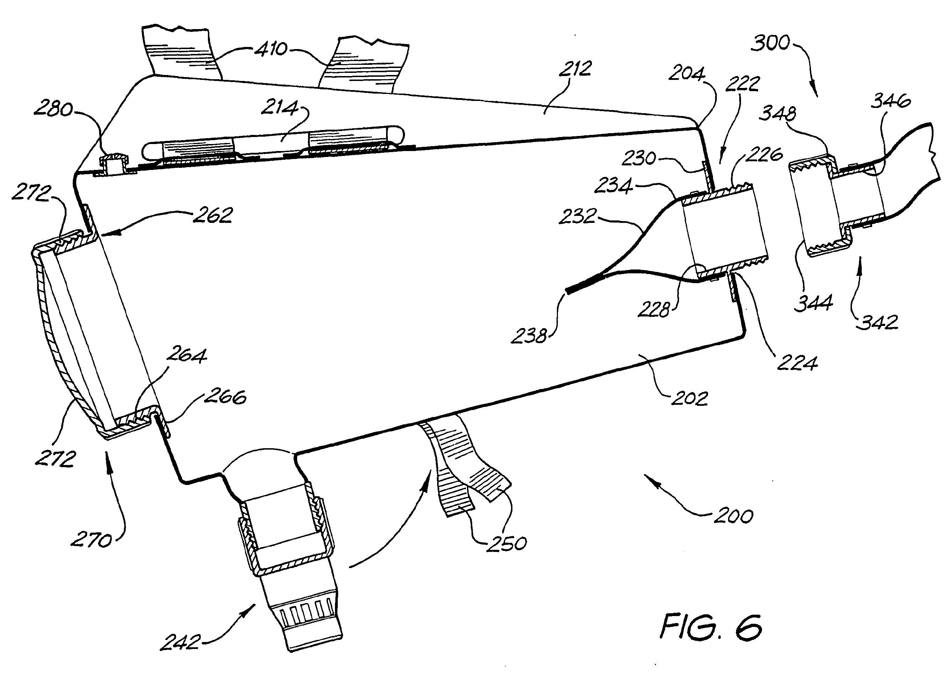

The chamber component 200 is also depicted in Figs. 5 and 6. The chamber component 200 has a shell 204, shaped as shown in the drawings, which defines an interior chamber 202 for storing urine. The shape of the chamber component 200, and the shell 204 in particular, is also illustrated in Fig. 9.

The shell 204 has an upper surface 206 that is slightly concave in profile. At the rear of the shell 204 there is a rear wall 206, and at the front a front wall 208. The upper surface 206, and the front and rear walls 206, 208 are joined by a lower surface 210 which is curved so that it extends between the two sides of the chamber component 200.

The shell 204 has a shape that outwardly tapers from the rear wall 206 to the front wall 208. The size of the rear wall 206 is less than that of the front wall 208, and the lower surface 210 of the shell 204 is shaped to accommodate this taper between the front wall 208 and the rear wall 206 of the shell 204.

Flexible flanges 212 are integral with the shell 204 and project from the longitudinal sides of the upper surface 206. The flanges 212 are generally flush with the adjoining portions of the lower surface 210, as depicted in Fig. 8. The flanges 212 are located along upper longitudinal sides of the chamber component 200, where the lower surface 210 respectively joins the upper surface 206. Along part of these flanges 212 are longitudinal slots 214 that are able to accommodate straps 410 for suspending the chamber component 200. The shell 204 of the chamber component 200 has various openings, each of which is described in turn below.

In the main chamber component 200, an entry aperture fitting 222, which defines an entry aperture 220, is positioned at the rear of the chamber component 200. The entry aperture fitting 222 includes a cylindrical surface 224 that extends through the entry 200 aperture in the chamber component 200, and has a screw-threaded portion 226 at an outer end, and a neck 228 at the inner end for attachment with a one-way valve fitting 232. The entry aperture fitting 222 is attached to the inner surface of the shell 204 of the chamber component 200 by a peripheral flange 230 that extends from the cylindrical surface 224 of the entry aperture fitting 222 between the screw-threaded portion 226 and the neck 228.

The base 234 of the one-way valve fitting 232 is disposed around the outer surface of the neck 228 of the entry aperture fitting 222. The sidewalls 236 of the valve fitting 232 taper to a nib 238 through which urine supplied through the entry aperture fitting 222 can pass. The sidewalls 236 of the valve fitting 232 are made of a resilient material so that a slight positive fluid pressure is required to open the nib 238 through which fluid can subsequently pass. Urine that is stored in the main chamber is generally unable to pass back through the valve fitting 232, as positive fluid pressure on the side of the fitting 232 is unable to prise open the nib 238 to allow urine to pass back through the valve fitting 232.

The chamber component 200 also includes an exit aperture 240 defined by an exit aperture fitting 242. From the shell 204 of the chamber component 200 there projects a peripheral flange 244 that terminates in a screw-threaded portion 246 that is able to engage a corresponding screw-threaded portion 248 of the exit aperture fitting 242. The exit fitting 242 can be interconnected with industrial suction equipment (not shown) to evacuate urine stored in the chamber 202.

The exit aperture fitting is able to swivel between a directly downwardly projecting position, indicated in Fig. 6, and a regular position against the lower surface 210 of the shell 204, indicated in Figs. 5, 9 and 12. Two retaining straps 250 are provided for the purpose of retaining the exit aperture fitting 242 in its regular position against the shell 204. Respective facing surfaces of the straps 250 use looped and hooked material to allow the straps 250 to releasably engage with each other, and thus retain the fitting 242 as required. When the main chamber component 200 is fitted to the mare 10, the exit aperture fitting 242 with typically be in its regular position. It is extended to its directly projecting position to enable urine to be removed through the exit aperture fitting 242.

At the front of the chamber component 200, distal the entry aperture, there is an access aperture 260 defined by a access fitting 262 including a matching base 264 and lid 270. The base 264 includes an annular support 266 that is attached to the inner surface of the shell 204 surrounding the access aperture 260. Projecting through the access aperture 260 is a screw-threaded portion 268 with which the lid 270 is able to engage. The lid 270 has a cover portion 272 integral with a screw-threaded portion 274 that matches that of the access fitting 262, allowing the lid 270 to be screwed onto the access fitting 262. The access aperture 260 is relatively large, and is intended to allow manual access to the chamber 202 for various purposes, such as hand cleaning with a scrubbing brush or other suitable tool. The access aperture 260 also allows for visual inspection of the contents of the chamber 202.

A vent aperture 280 is provided on an upper surface of the chamber component 200. The venture aperture 280 is a relatively small aperture intended to facilitate the flow of urine in and out of the chamber 202 by providing an outlet and inlet for gas to balance gas pressures within the chamber 202. This venting arrangement is desirable, due to the use of the one-way valve fitting 232 to provide urine to the chamber 202, and the regular use of suction equipment to rapidly evacuate urine stored in the chamber 202.

The vent aperture 280 is able to be sealed so that the chamber component 200 can be used to store and transport urine in the chamber component 200 once the urine has been harvested from the mare 10.

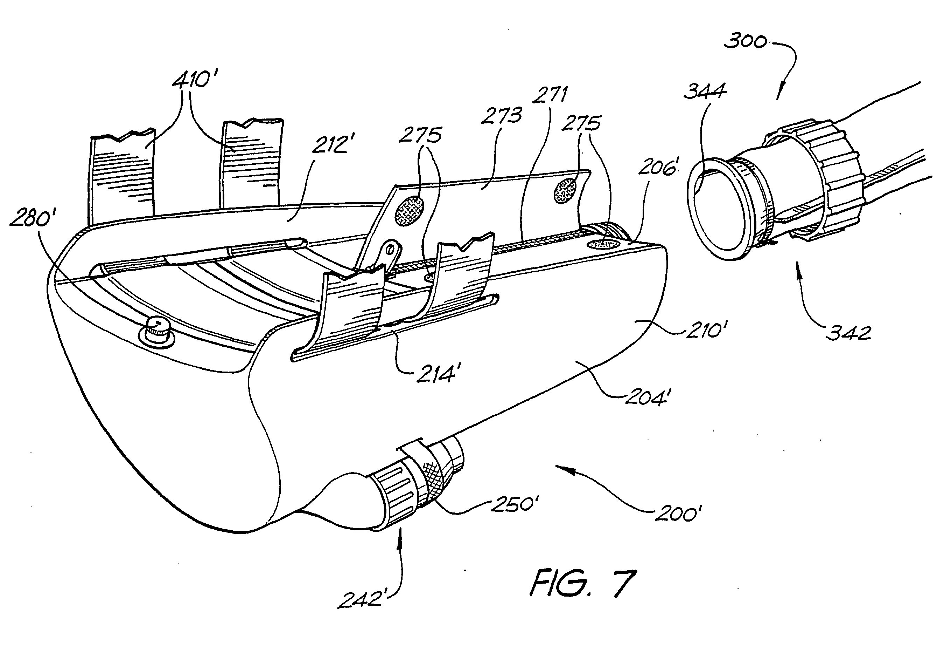

Fig. 7 illustrates a chamber component 200' that can be used as an alternative to the chamber component 200' illustrated in Fig. 5. Corresponding reference numerals are used in Fig. 7 to indicate corresponding features. The chamber component 200' does not include a lid 270 at the front of the chamber component 200'. Instead, there is provided a zipper arrangement 271, which in use is covered by a flap 273. The flap 273 can cover the zipper arrangement 271 using co-operating attachment pads 275 (such as Velcro^{™} pads). Any other suitable attachment means can be used. The zipper arrangement 271 provides access to the interior of the chamber component 200', and the one-way valve housed therein.

The collection device 1000 has various advantages not provided by existing equipment. In particular, the use of a tubular passage that allows urine to pass from the rear of the mare 10 to the main chamber component 200 provides a far less cumbersome and intrusive arrangement than is provided by existing "diaper" collection devices. For example, the use of diaper-like and similar collection devices generally prevents the mare's foal from suckling from the mare. However, the use of a tubular passage allows a foal relatively unobstructed access to the mare's teat so that the foal can suckle from the mare 10.

A storage chamber also provides advantages when compared with prior art arrangements. The storage chamber is of relatively low volume (for example, around 4 litres) compared with existing diaper devices that can have a capacity of 10 litres or more. The storage chamber stores only urine, rather than a slurry of faeces and urine, which is the case when a diaper is used. Accordingly, the weight of the storage chamber when full is significantly less compared with a corresponding diaper device when filled to capacity.

Storage chambers can be replaced as required, after they have been filed with urine from the mare 10, as the storage chamber can be readily disengaged from the tubular passage. This does not require that the entire collection device be replaced at regular intervals, as with the prior art diapers.

Mares urinate predominantly during the evenings and overnight, and urinate relatively little during the day. Accordingly, the storage chamber can be fitted overnight to collect urine, and removed in the morning, filled with the nightly harvest. As there may be relatively little urine output during the day, even greater comfort and freedom can be accorded to the mare during the day by not fitting the storage chamber. By contrast, existing diaper arrangements do not permit convenient regular replacement at such frequent intervals.

As noted above, the storage chamber alone can be conveniently removed from the mare to reduce the weight carried by the mare 10. Performing this step minimises the risk that the mare 10 will be inclined to kick or otherwise adversely react to a handler. If instead the entire collection device was to be removed at one time, the risk of injury to the handler increases as the handler is required to remove the collection device while standing near the rear of the horse, where the handler can be more readily kicked by the mare.

The storage chamber is desirably manufactured from a hard plastics material that permits the storage chamber, once the storage chamber is filled with urine, to be disengaged from the tubular passage and removed from the mare 10. The storage chamber can also desirably be used to transport the urine while the urine is stored in the storage chamber. Alternatively, industrial suction equipment can be attached to an exit aperture on the storage chamber to facilitate convenient removal of urine from the storage chamber, at appropriate intervals.

The collection device 1000 referred to herein in intended to be used for the harvesting of urine from pregnant mares. However, modified arrangements that are more particularly suitable for the collection of urine from other animals, whether pregnant or not, can also be provided by one skilled in the relevant art.

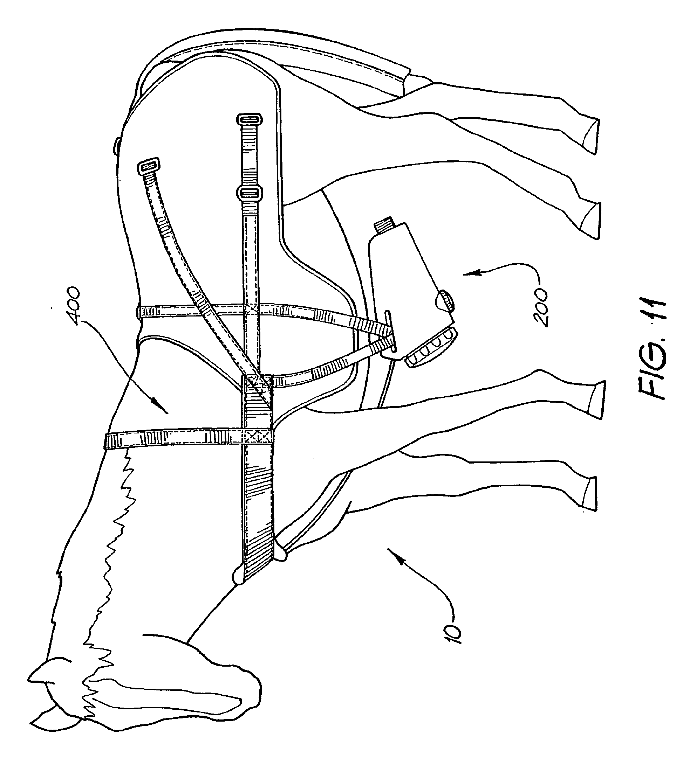

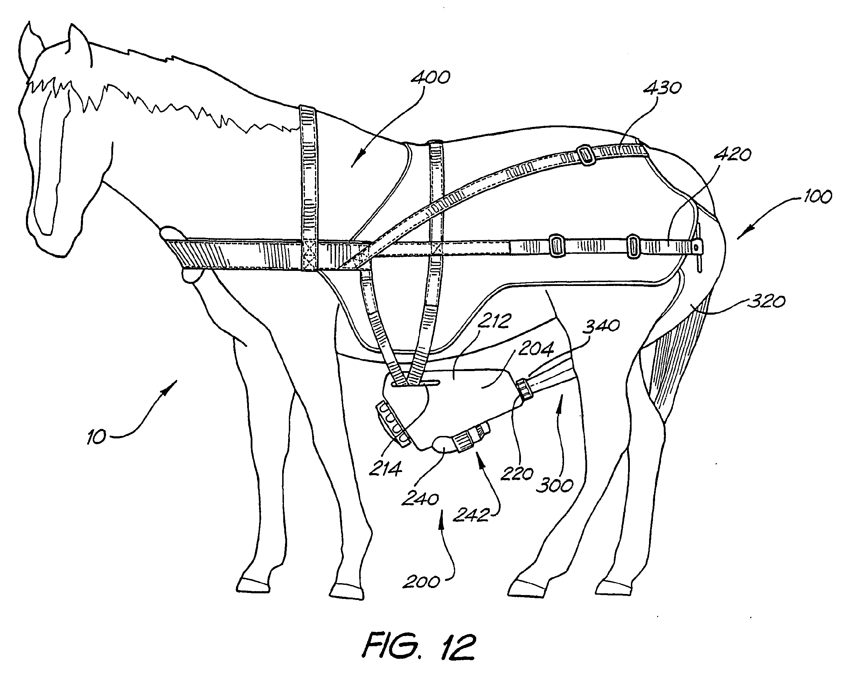

Fig. 11 depicts a mare 10 fitted with a strap assembly 400 from which is suspended a collection device 1000 for the collection of urine from the mare 10. A perineal harness 100 is not fitted in Fig. 11. Fig. 12 is a similar representation to Fig. 11, though in this case the perineal harness 100 is also fitted to the mare 10. In use, the perineal harness 100 is fitted to the mare 10 as illustrated in Fig. 12, and a collection tube or passage introduced to funnel urine from the mare's vulva to the collection device 1000.

The support portion 60 may be hollow, or filled with a material -such as, for example, foam, a salt solution, liquid silicon, or gel. The body 40 is preferably manufactured of a soft, slippery flexible material such as, for example, medical grade silicon or rubber. The material from which the body 40 is fabricated is intended to avoid any discomfort to the mare while snugly conforming to be contours of the mare to minimise any risk of faecal contamination of collected urine.

In use, the perineal harness 100 can be readily replaced with a similar replacement perineal harness as required. Replacement can be desirable when, for example, the original perineal harness becomes soiled, or suffers general wear and tear.

Further, the material of at least the deflector plate 80 is desirably sufficiently flexible so that the deflector plate is able to stretched by tension though the breeching straps 420 to conform to the differing contours of different animals. Existing arrangements are generally designed to be used with a particular animal, such as a mare. Accordingly, such existing arrangements are generally unable to be successfully used with other types of animals with little, if any, modification.

The front contact edges 88, 90 of the deflector plate 80 are,- due to their configuration with respect to the support portion 60, intended to be able to conform to mares having differently profiled buttocks regions. The deflector plate 80 can conform to the buttocks regions of various different animals of comparable size, such as cows. The perineal harness 100 can be equally well used with animals other than mares, such as cows, sows, donkeys, as well as other similarly proportioned female animals.

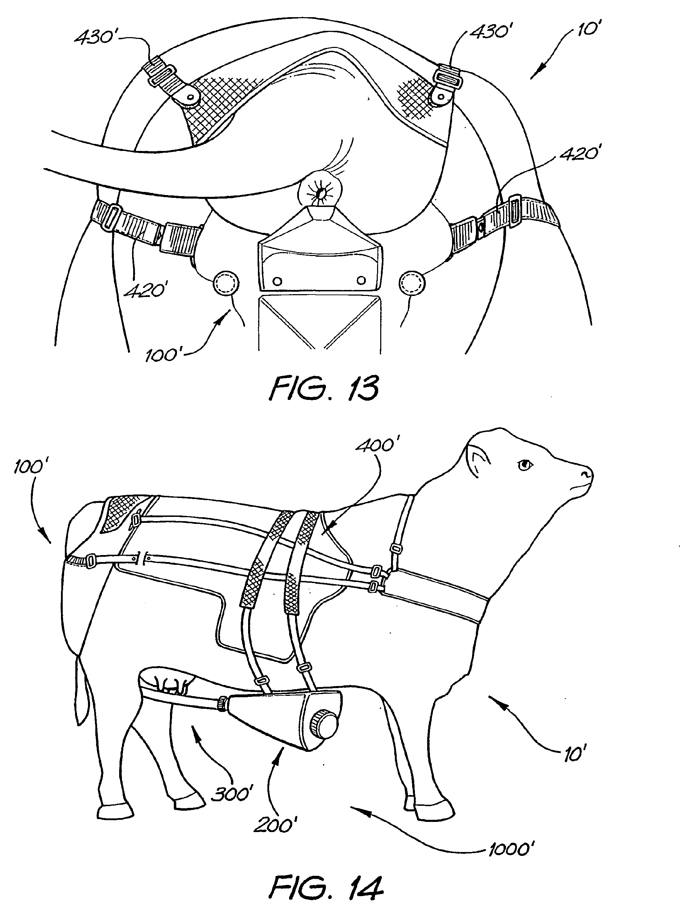

In this respect, Fig. 13 illustrates a perineal harness 100' fitted to a cow 10' using straps 420', 430'. Fig. 14 illustrates the perineal harness 100' and collection device 1000' fitted to the cow 10' using a strap assembly 400'.

The perineal harness arrangement described herein provides a means for assisting with the collection of urine from animals. The perineal harness 100 is directly "pulled" against the buttocks of the animals rather than, as is the case with various alternative arrangements, pushed or suspended against the perineum region of the animal. The benefits of this approach are apparent from the above, description herein. These advantages include a generally improved fit against the profile of the animal's buttocks to assist in deflecting faeces and other possible contaminants away from the animal. Deflecting faeces completely away from the animal substantially avoids contamination of collected urine. The perineal harness 100, when fitted appropriately, avoids causing significant irritation or discomfort to the animal, or obstructing the flow of urine that can result in local urinary tract and other infection.

Various alterations and modifications can be made to the techniques and arrangements described herein, as would be apparent to one skilled in the relevant art.

## Claims

1. A perineal harness device (100) suitable for use in collecting urine from animals (10), the device (100) including:
a support portion (60) able to be positioned between the buttocks of an animal In the perineum region of the animal, directly below the anus;
a deflector plate (80) supported by the support portion (60) and having a front contact edge (88, 90); and
engaging portions (422) attached to the deflector plate (80);
wherein, in use, the support portion (60) is positioned between the buttocks of the animal and the engaging portions (422) are tensioned to conform the front contact edge (88, 90) of the deflector plate (80) against the buttocks, to assist in deflecting faeces away from the buttocks of the animal.

2. A device (100) claimed in claim 1, wherein the support portion (60) is integral with the deflector plate (80).

3. A device (100) as claimed in claim 1 or 2, wherein the engaging portions (422) are integral with the deflector plate (80), the engaging portions (422) including two arms (422), each arm (422) extending from a respective end (90) of the front contact edge of the deflector plate (80).

4. A device (100) as claimed in claim 3, wherein each arm (422) can be attached to engaging straps (420) that can be attached to a strap assembly (400) fitted to the animal (10), or connected to the sides of a urine collection device (1000).

5. A device (100) as claimed in claim 3 or 4, wherein the arms (422) and the engaging straps (420) are sleeved in a suitable material to avoid irritating the animal due to rubbing or chaffing of the arms (422) engaging straps (420) against the animal.

6. A device (100) as claimed in any one of claims 3 to 5, wherein the engaging portions (422) allow the position of the device (100) to be adjusted in relation to the buttocks, side regions or semitendinosus, and perineal region of the animal (10) by adjusting the position of and the tension in the engaging straps (420).

7. A device (100) as claimed in any one of the preceding claims, wherein the front contact edge (88, 90) of the deflector plate (80) extends upwardly against the buttocks of the animal (10) when the device (100) is fitted to the animal (10), to further assist in deflecting faeces away from the buttocks of the animal (10).

8. A device (100) as claimed in any one of the preceding claims, wherein the deflector plate (80) extends beyond the support portion (60) so that the front contact edge (88, 90) of the deflector plate (80) can, in use, be upturned against the buttocks of the animal (10).

9. A device (100) as claimed in any one of the preceding claims, wherein the support portion (60) is generally wedge-shaped.

10. A device (100) as claimed in claim 9, wherein the wedge-shaped profile of the support portion (60) is shaped to locate the device (100) between the buttocks of the animal (10), in the perineal region.

11. A device (100) as claimed in any one of the preceding claims, wherein the deflector plate (80) and the engaging portions (422) are shaped and dimensioned so that the device (100) can be used with animals (10) of varying anatomical shapes and proportions.

12. A device (100) as claimed in any one of the preceding claims, wherein the support portion (60), the deflector plate (80) and the engaging portions (422) are fabricated from a relatively soft, resilient rubber material that can be readily stretched to conform against the buttocks of differently shaped animals (10).

13. A device (100) as claimed in any one of the preceding claims, wherein the device (100), which in use is pulled directly against the buttocks of the animal (10) via the engaging portions (422), is stably positioned so that the device (100) is unlikely to slip out of the place during ordinary movement of the animal.

14. A device (100) as claimed in any one of the preceding claims, wherein the front contact edge (88, 90) of the deflector plate (80) provides, with appropriate pressure from the engaging portions (422), a relatively tight and sealing engagement against the buttocks of the animal (10).

## Patentansprüche

1. Perinealgurtvorrichtung (100), die zur Verwendung beim Sammeln von Urin von Tieren (10) eingerichtet ist, wobei die Vorrichtung (100) folgendes aufweist:
einen Stützabschnitt (60), der geeignet ist, zwischen den Hinterbacken eines Tieres im Perineumbereich des Tieres direkt unterhalb des Anus angeordnet zu werden;
eine Ablenkplatte (80), die von dem Stützabschnitt (60) getragen wird und eine vordere Kontaktkante (88, 90) aufweist; und
Eingriffabschnitte (422), die an der Ablenkplatte (80) befestigt sind,
wobei beim Gebrauch der Stützabschnitt (60) zwischen den Hinterbacken des Tieres angeordnet ist und die Eingriffabschnitte (422) gespannt sind, um die vordere Kontaktkante (88, 90) der Ablenkplatte (80) an die Hinterbacken anzupassen, um ein Ablenken von Fäkalien von den Hinterbacken des Tieres weg zu unterstützen.

2. Vorrichtung (100) nach Anspruch 1, wobei der Stützabschnitt (60) ein Teil der Ablenkplatte (80) ist.

3. Vorrichtung (100) nach Anspruch 1 oder 2, wobei die Eingriffabschnitte (422) ein Teil der Ablenkplatte (80) sind, wobei die Eingriffabschnitte (422) zwei Arme (422) auf weisen, wobei sich jeder Arm (422) von einem entsprechenden Ende (90) der vorderen Kontaktkante der Ablenkplatte (80) erstreckt.

4. Vorrichtung (100) nach Anspruch 3, wobei jeder Arm (422) an Eingriffgurten (420) befestigt werden kann, die an einer Gurtanordnung (400), die an das Tier (10) angepasst ist, befestigt oder mit den Seiten einer Urinsammelvorrichtung (1000) verbunden sein können.

5. Vorrichtung (100) nach Anspruch 3 oder 4, wobei die Arme (422) und die Eingriffgurte (420) mit einem geeigneten Material umhüllt sind, um ein Reizen des Tieres aufgrund von Scheuern oder Reiben der Arme (422) oder der Eingriffgurte (420) gegen das Tier zu vermeiden.

6. Vorrichtung (100) nach einem der Ansprüche 3 bis 5, wobei die Eingriffabschnitte (422) ermöglichen die Position der Vorrichtung (100) in Bezug auf die Hinterbacken, die Seitenbereiche oder den Semitendinosus und den Perinealbereich des Tieres (10) durch Anpassen der Position und der Spannung der Eingriffgurte (420) anzupassen.

7. Vorrichtung (100) nach einem der vorhergehenden Ansprüche, wobei sich die vordere Kontaktkante (88, 90) der Ablenkplatte (80) aufwärts gegen die Hinterbacken des Tieres (10) erstreckt, wenn die Vorrichtung (100) an das Tier (10) angepasst ist, um ein Ablenken von Fäkalien von den Hinterbacken des Tieres (10) weg weiter zu unterstützen.

8. Vorrichtung (100) nach einem der vorhergehenden Ansprüche, wobei sich die Ablenkplatte (80) hinter den Stützabschnitt (60) erstreckt, so dass die vordere Kontaktkante (88, 90) der Ablenkplatte (80) bei Gebrauch gegen die Hinterbacken des Tieres (10) nach oben gedreht werden kann.

9. Vorrichtung (100) nach einem der vorhergehenden Ansprüche, wobei der Stützabschnitt (60) im Allgemeinen keilförmig ist.

10. Vorrichtung (100) nach Anspruch 9, wobei das keilförmige Profil des Stützabschnitts (60) geformt ist, um die Vorrichtung (100) zwischen den Hinterbacken des Tieres (10) im Perinealbereich anzuordnen.

11. Vorrichtung (100) nach einem der vorhergehenden Ansprüche, wobei die Ablenkplatte (80) und die Eingriffabschnitte (422) derart geformt und bemaßt sind, dass die Vorrichtung (100) bei Tieren (10) unterschiedlicher anatomischer Formen und Proportionen verwendet werden kann.

12. Vorrichtung (100) nach einem der vorhergehenden Ansprüche, wobei der Stützabschnitt (60), die Ablenkplatte (80) und die Eingriffabschnitte (422) aus einem verhältnismäßig weichen, elastischen Gummimaterial hergestellt sind, das leicht gedehnt werden kann, um sich an die Hinterbacken von unterschiedlich geformten Tieren (10) anzupassen.

13. Vorrichtung (100) nach einem der vorhergehenden Ansprüche, wobei die Vorrichtung (100), die beim Gebrauch durch die Eingriffabschnitte (422) direkt gegen die Hinterbacken des Tieres (10) gezogen wird, stabil angeordnet ist, so dass es unwahrscheinlich ist, dass die Vorrichtung (100) während einer gewöhnlichen Bewegung des Tieres von der Stelle rutscht.

14. Vorrichtung (100) nach einem der vorhergehenden Ansprüche, wobei die vordere Kontaktkante (88, 90) der Ablenkplatte (80) mit einem geeigneten Druck von den Eingriffabschnitten (422) einen verhältnismäßig festen und dichten Eingriff gegen die Hinterbacken des Tieres (10) liefert.

## Revendications

1. Dispositif de harnais périnéal (100) approprié pour être utilisé pour collecter de l'urine à partir d'animaux (10), le dispositif (100) comportant :
une partie de support (60) apte à être positionnée entre les fesses d'un animal dans la zone du périnée de l'animal, directement au-dessous de l'anus ;
une plaque de déviation (80) supportée par la partie de support (60) et comportant un bord de contact avant (88, 90) ; et
des parties d'engagement (422) fixées à la plaque de déviation (80) ;
dans lequel, lors de l'utilisation, la partie de support (60) est positionnée entre les fesses de l'animal et dans lequel les parties d'engagement (422) sont en tension pour ajuster le bord de contact avant (88, 90) de la plaque de déviation (80) contre les fesses, afin d'aider à éloigner, par déviation, les matières fécales de la croupe de l'animal.

2. Dispositif (100) selon la revendication 1, dans lequel la partie de support (60) est solidaire de la plaque de déviation (80).

3. Dispositif (100) selon la revendication 1 ou 2, dans lequel les parties d'engagement (422) sont solidaires de la plaque de déviation (80), les parties d'engagement (422) comportant deux bras (422), chaque bras (422) s'étendant à partir d'une extrémité respective (98) du bord de contact avant de la plaque de déviation (80).

4. Dispositif (100) selon la revendication 3, dans lequel chaque bras (422) peut être fixé aux sangles d'engagement (420) qui peuvent être fixées à un ensemble de sangles (400) ajusté à l'animal (10) ou raccordé aux côtés d'un dispositif collecteur d'urine (1000).

5. Dispositif (100) selon la revendication 3 ou 4, dans lequel les bras (422) et les sangles d'engagement (420) sont gainées par un matériau approprié pour éviter d'irriter l'animal en raison d'un frottement ou d'une écorchure des bras (422) ou par les sangles d'engagement (420) contre l'animal.

6. Dispositif (100) selon l'une quelconque des revendications 3 à 5, dans lequel les parties d'engagement (422) permettent à la position du dispositif (100) d'être réglée par rapport aux fesses, aux zones latérales ou demi-tendineuses, et à la zone périnéale de l'animal (10) en ajustant la position des, et la tension dans les, sangles d'engagement (420).

7. Dispositif (100) selon l'une quelconque des revendications précédentes, dans lequel le bord de contact avant (88, 90) de la plaque de déviation (80) s'étend vers le haut contre les fesses de l'animal (10) lorsque le dispositif (100) est ajusté sur l'animal (10) afin d'aider encore à l'éloignement, par déviation, des matières fécales de la croupe de l'animal (10).

8. Dispositif (100) selon l'une quelconque des revendications précédentes, dans lequel la plaque de déviation (80) s'étend au-delà de la partie de support (60) de sorte que le bord de contact avant (88, 90) de la plaque de déviation (80) peut, lors de l'utilisation, être retourné contre la croupe de l'animal (10).

9. Dispositif (100) selon l'un quelconque des revendications précédentes, dans lequel la partie de support (60) est généralement configurée en forme de coin.

10. Dispositif (100) selon la revendication 9, dans lequel le profil en forme de coin de la partie de support (60) est configuré en vue de placer le dispositif (100) entre les fesses de l'animal (10) dans la zone périnéale.

11. Dispositif (100) selon l'une quelconque des revendications précédentes, dans lequel la plaque de déviation (80) et les parties d'engagement (422) sont configurées et dimensionnées de façon que le dispositif (100) puisse être utilisé avec des animaux (10) de configurations anatomiques et de proportions différentes.

12. Dispositif (100) selon l'une quelconque des revendications précédentes, dans lequel la partie de support (60), la plaque de déviation (80) et les parties d'engagement (422) sont fabriquées à partir d'un matériau de caoutchouc élastique, relativement souple, lequel peut être facilement étiré pour se placer contre la croupe d'animaux configurés de façon différente (10).

13. Dispositif (100) selon l'une quelconque des revendications précédentes, dans lequel le dispositif (100) qui, lors de l'utilisation, est tiré directement contre les fesses de l'animal (10) par l'intermédiaire des parties d'engagement (422), est positionné de façon stable de sorte que le dispositif (100) ne peut vraisemblablement pas glisser hors de sa place au cours d'un mouvement ordinaire de l'animal.

14. Dispositif (100) selon l'une quelconque des revendications précédentes, dans lequel le bord de contact avant (88, 90) de la plaque de déviation (80) fournit, avec une pression appropriée provenant des parties d'engagement (422), un engagement d'étanchéité et relativement serré contre les fesses de l'animal (10).
